Europäisches Patentamt

European Patent Office

Office européen des brevets

(11) Veröffentlichungsnummer: **0 071 900**
A2

## (12) EUROPÄISCHE PATENTANMELDUNG

(21) Anmeldenummer: **82106879.8**

(22) Anmeldetag: **30.07.82**

(51) Int. Cl.³: **B 60 C 7/00,** B 60 C 7/10, B 60 C 9/00

(30) Priorität: **12.08.81 DE 3131789**

(43) Veröffentlichungstag der Anmeldung: **16.02.83**
**Patentblatt 83/7**

(84) Benannte Vertragsstaaten: **AT BE DE FR GB IT LU NL SE**

(71) Anmelder: **BAYER AG, Zentralbereich Patente, Marken und Lizenzen, D-5090 Leverkusen 1, Bayerwerk (DE)**

(72) Erfinder: **Ippen, Jakob, Dr., Schleiermacherstrasse 17, D-5090 Leverkusen 1 (DE)**
Erfinder: **Stüttgen, Friedel, Albrecht-Dürer-Strasse 94, D-5024 Pulheim (DE)**

(54) Gummifederreifen.

(57) Der Gummifederreifen ist aus einheitlicher Mischung in einem Arbeitsgang hergestellt und besitzt eine besondere Gestaltung der Seitenwand.

0071900

BAYER AKTIENGESELLSCHAFT     5090 Leverkusen, Bayerwerk

Zentralbereich
Patente, Marken und Lizenzen  KR/m-c

10. Aug. 1981

<u>Gummifederreifen</u> .

Die Erfindung betrifft einen Gummifederreifen für geteilte Felge, bestehend aus einem ringförmigen Vollgummi-Körper mit Reifenfuß und Lauffläche aus einheitlicher Gummimischung.

Es sind massive Reifen bekannt, die im Gegensatz zu
dem üblichen Luftreifen verletzungsunempfindlich und
damit weitgehend pannensicher sind. Sie besitzen jedoch
eine so große Masse, daß sich beim Abrollen ein Hitzestau bilden kann, der dann zur Zerstörung des Reifenmaterials führt.

Deshalb wird heute der Reifen meist in drei Schichten
hergestellt. Der Reifenfuß besteht zur besseren
Fixierung aus einer harten Gummimischung. Der Mittelteil wird zur Reduzierung der Hitzeentwicklung durch
Verringerung des Rollwiderstandes aus einer hochelastischen Mischung hergestellt. Für die Lauffläche
wird ein abriebfestes Material verwendet. Die Herstellung in drei verschiedenen Schichten ist aufwendig,
weil jedes Halbfabrikat separat gefertigt werden muß.
Ein weiterer Nachteil ist die lohnintensive Handkonfektion, die außerdem mit hohen Fehlerquoten behaftet
sein kann.

Le A 21 245-Europa

0071900

Aufgabe der Erfindung ist es, einen pannensicheren Reifen, insbesondere für den Einsatz im Industriebereich zu finden, der bei hoher Tragkraft eine gute Seitenstabilität, einen ausreichenden Federkomfort, eine gleichmäßige Laufflächenbeanspruchung und im Dauerbetrieb eine hohe Lebensdauer aufweist, wobei der Reifen einfach zu fertigen und auszuwechseln sein muß.

Die Aufgabe wird erfindungsgemäß dadurch gelöst, daß bei dem Vollgummikörper an jeder Seitenwand ein oberer Rand, ein Mittelbereich und ein unterer Rand durch parallel zum Äquator umlaufende, im Querschnitt mindestens teilweise ausgerundete Aussparungen gebildet sind und daß als Drahtkern mindestens zwei parallel umlaufende metallene Ringe, die untereinander in Abständen durch Stege verbunden sind, angeordnet sind.

Vorteilhaft ist bei dem erfindungsgemäßen Gegenstand, daß trotz hoher Elastizität des Reifens einerseits keine große Walkarbeit, die zur Zerstörung der Gummimischung führen kann, anfällt und andererseits eine hohen Seitenstabilität, die ein Kippen oder ein Abdrehen bei engen Kurven beispielsweise von Gabelstaplern verhindert, vorhanden ist. Weiter wird der Laufflächenstreifen gleichmäßig beansprucht, so daß neben einer guten Fahrdynamik (Rundlauf) eine gleichmäßige Abnutzung gewährleistet ist. Auch die Abtragung der Kräfte vom Zenith des Gummifederreifens bis zum Reifenfuß erfolgt ohne Störung. Dadurch wird eine

Le A 21 245

Federcharakteristik erreicht, die einem Luftreifen nahekommt. Trotz des gegenüber dem Luftreifen höheren Gewichts von 30 - 50 % liegen erhebliche Einsparungen durch sonst übliche Verstärkungselemente - wie beispielsweise Gürtel - vor. Ein weiter Vorteil ist die Pannensicherheit, denn es fehlen bei dieser Reifenkonstruktion verletzungsempfindliche Verstärkungselemente. Darüber hinaus kann der Reifen auf jeder normalen geteilten Felge montiert werden. Bedingt durch die einheitliche Gummimischung und durch den von außen durch zurückziehbare Zentrierstifte in der Form fixierbaren Drahtkorb aus metallenen Ringen mit angeschweißten, verbindenden Stegen ist sowohl das Transferverfahren wie auch das Spritzverfahren einsetzbar. Darüber hinaus läßt sich die Fertigung voll automatisieren. Die Konstruktion ist also sehr wirtschaftlich.

In einer besonderen Ausführungsform des erfindungsgemäßen Gegenstandes liegt die Mitte der Aussparung des Mittelbereiches in einer Höhe gleich dem 0,4-0,5-fachen der Gesamthöhe des Gummifederreifens, wobei die Aussparung eine (axiale) Tiefe vom 0,1-0,2-fachen der Gesamtbreite und eine (radiale) Höhe im maximalen Bereich vom 0,3-0,5-fachen der Gesamthöhe besitzt.

Durch die gewählten Abmessungen wird eine hohe Elastizität des Gummifederreifens erreicht, wobei der vorhandene äußere ringförmige Teil so steif ist, daß beim Abwälzen der Lauffläche eine gleichmäßige Beanspruchung und damit Abnutzung gewährleistet ist.

Le A 21 245

- 4 -

0071900

In einer weiteren Ausführungsform ist die im Mittelbereich liegende Aussparung mit durch diese hindurchgreifenden, ausgerundeten Einbuchtungen, die einen Innenradius vom 0,1-0,3-fachen bei einer Tiefe vom 0,2-0,4-fachen der Reifenbreite besitzen, versehen.

Durch die zusätzlichen Einbuchtungen wird die Kühlung verbessert und damit die Gefahr eines Hitzstaues verringert. Gleichzeitig ist durch die geringere Masse die Fahrdynamik günstiger.

In einer anderen Ausführungsform sind beiderseits 10 - 50 Einbuchtungen, vorzugsweise 12 - 30 Einbuchtungen, versetzt angeordnet.

Bei der vorgeschlagenen Anzahl von Einbuchtungen gewährleistet die stehengebliebene Gummimasse, daß eine gleichmäßige Übertragung der Kräfte erfolgt.

In einer bevorzugten Ausführungsform besitzt die obere und die untere Aussparung einen Innenradius vom 0,1-0,2-fachen der Reifenbreite.

Durch den vorgeschlagenen Übergang an der Schulter wird ein starker Hitzestau vermieden. Weiter stützt sich der Gummifederreifen mit der konkav geformten unteren Aussparung zur Felge hin ab und zwar in dem Maße, wie sich die Druckverteilung vom Zenith zum Felgenhorn hin ändert.

Le A 21 245

0071900

In einer möglichen Ausführungsform schließen an die
obere Aussparung in axialer Richtung systematisch kleinere
und größere Profileinschnitte an.

Die großen Profileinschnitte sind so angeordnet, daß
sie direkt gegenüber den Einbuchtungen liegen. Es wird
so Gewicht gespart, der Querschnitt reduziert und
genügend Kühlfläche geschaffen. Durch den Wechsel im
Lauffflächenbereich werden genügend Traktionskanten
geschaffen, die einen möglichst geringen Schlupf bei
der Kraftübertragung zulassen und damit die Lebensdauer
erhöhen.

Bei einem Verfahren zur Herstellung eines Gummifederreifens werden vor dem Einbringen der Gummimischung in
ein geöffnetes Werkzeug mit Steg verbundene Ringe in
Kernhalter eingelegt, die nach dem Ausfüllen des geschlossenen Werkzeuges mit Gummimischung herausgezogen
werden.

Die Kernhalter sorgen für eine genaue Positionierung
während des Preßvorganges. Sie werden beim Öffnen der
Form herausgezogen, so daß sie später beim fertigen
Reifen nicht mehr stören.

Zur Herstellung ist jeder beliebige Natur- oder Synthesekautschuk geeignet, dessen Vulkanisate eine Shore-Härte
zwischen 60 und 90 und einen Spannungswert von 10,0 bis
20,0 MPa bei 300 % Dehnung aufweisen.

Le A 21 245

Besonders geeignet sind Naturkautschuk, Styrolbutadien-Kautschuk, Ethylen-Propylen-Terpolymerisat-Kautschuk, Polybutadien sowie jeder schnellhärtende Kunststoff bzw. jedes Polyurethan-Elastomer. Beispielsweise werden die im folgenden beschriebenen Kautschuk-Mischungen verwendet. Die für die Zusammensetzung angegebenen Zahlen sind Gewichtsteile.

<u>Mischung 1</u>

| <u>Zusammensetzung:</u> | Gew.-Tle. |
|---|---|
| Naturkautschuk | 25,0 |
| Styrol-Butadien-Copolymerisat | 25,0 |
| cis-1,4-Polybutadien | 50,0 |
| Ruß N 330 | 80,0 |
| Harz | 4,0 |
| Stearinsäure | 2,0 |
| N-Isopropyl-N'-phenyl-p-phenylendiamin | 2,5 |
| 2,2,4-Trimethyl-1,2-dihydrochinolin, polym. | 1,5 |
| Zinkoxid | 5,0 |
| Benzothazyl-2-cyclohexylsulfenamid | 1,2 |
| Unlöslicher Schwefel | 2,66 |
| | 198,86 |

<u>Eigenschaften:</u>

| | |
|---|---|
| Mischungsplastizität/80°C | |
| Defo-Härte/Defo-Elastizität | 7700/17 |
| Zugfestigkeit (MPa) | 19,9 |

<u>Le A 21 245</u>

| Bruchdehnung (%) | 310 |
| Spannungswert b. 300 % Dehnung (MPa) | 19,1 |
| Weiterreißfestigkeit nach Pohle (N/4 mm) | 160 |
| Härte (Shore A) bei 20°C | 82 |

Mischung 2

| Zusammensetzung: | Gew.-Tle. |
| --- | --- |
| Naturkautschuk | 80,0 |
| cis-1,4-Polybutadien | 20,0 |
| Ruß N 330 | 55,0 |
| Aromatisches Mineralöl | 3,0 |
| Stearinsäure | 2,5 |
| Ozonschutzwachs | 1,0 |
| N-Isopropyl-N'-phenyl-p-phenylendiamin | 2,5 |
| 2,2,4-Trimethyl-1,2-dihydrochinolin, polym. | 1,5 |
| Zinkoxid | 5,0 |
| Benzothiazyl-2-sulfenmorpholid | 1,2 |
| Unlöslicher Schwefel | 1,9 |
| | 173,6 |

Eigenschaften:

| Mischungsplastizität / 80°C | |
| --- | --- |
| Defo-Härte/Defo-Elastizität | 1100/15 |
| Zugfestigkeit (MPa) | 21,9 |
| Bruchdehnung (%) | 460 |
| Spannungswert bei 300 % Dehnung (MPa) | 13,0 |
| Weiterreißfestigkeit nach Pohle (N/4 mm) | 370 |
| Härte (Shore A) bei 20°C | 66 |

Le A 21 245

Mischung 3:

| Zusammensetzung: | Gew.-Tle. |
|---|---|
| Ölverstrecktes Styrol-Butadien-Copolymerisat | 68,5 |
| Ölverstrecktes cis-1,4-Polybutadien | 68,5 |
| Ruß N 220 | 95,0 |
| Aromatisches Mineralöl | 20,0 |
| Harz | 2,0 |
| Stearinsäure | 2,0 |
| Ozonschutzwachs | 1,5 |
| N-Isopropyl-N'-phenyl-p-phenylendiamin | 2,5 |
| 2,2,4-Trimethyl-1,2-dihydrochinolin, polym. | 1,5 |
| Zinkoxid | 3,0 |
| Benzothiazyl-2-cyclohexylsulfenamid | 1,5 |
| Tetramethylthiurammonosulfid | 0,2 |
| Unlöslicher Schwefel | 2,4 |
| | 268,6 |

Eigenschaften:

| | |
|---|---|
| Mischungsplastizität / 80°C | - |
| Defo-Härte/Defo-Elastizität | 1550/16 |
| Zugfestigkeit (MPa) | 15,5 |
| Bruchdehnung (%) | 410 |
| Spannungswert bei 300 % Dehnung (MPa) | 10,8 |
| Weiterreißfestigkeit nach Pohle (N/4 mm) | 240 |
| Härte (Shore A) bei 20°C | 66 |

Le A 21 245

0071900

Ein Beispiel der Erfindung ist in den Zeichnungen dargestellt und wird im folgenden näher beschrieben. Es zeigen

Fig. 1    Schnitt durch Gummifederreifen

Fig. 2    Ansicht eines Gummifederreifens

Fig. 3    Schnitt durch Werkzeug von Gummifederreifen.

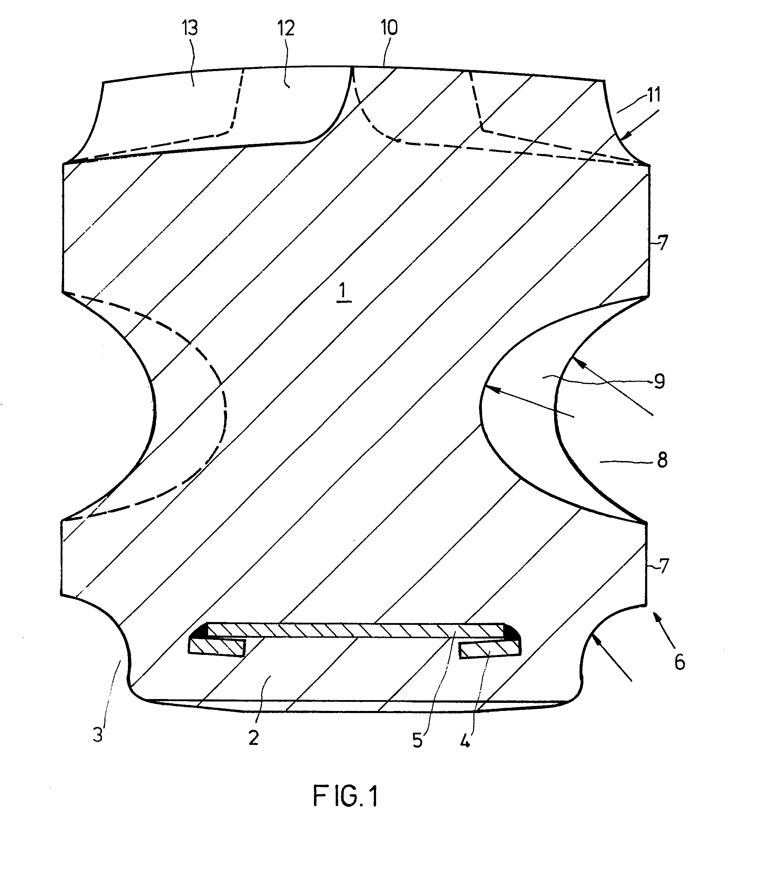

In Fig. 1 ist als Vollgummikörper 1 ein Gummifederreifen
im Querschnitt dargestellt. Er besteht aus einem Reifenfuß 2 mit im Randbereich vorgesehenen kreisbogenförmigen Aussparungen 3 sowie zwei flachen umlaufenden
Stahlkern-Ringen 4, die durch Stege 5 verbunden sind.
Jede Seitenwand 6 ist gebildet durch zwei in radialer
Ebene liegende kreisringförmige Flächen 7, zwischen
denen sich in axialer Richtung, eine im Querschnitt
bogenartige Aussparung 8 erstreckt, die durch
zusätzliche, auf dem Umfang verteilte und zur gegenüberliegenden Seitenwand 6 versetzte tiefergehende
Einbuchtungen 9 mit kreisabschnittförmigem Boden unterbrochen ist. Den oberen Abschluß bildet die Lauffläche
10 mit bogenartiger Aussparung 11. Das Profil
besteht aus breiten, bis zur Mitte sich erstreckenden
Profileinschnitten 12 und dazwischen angeordneten
kleineren Profileinschnitten 13.

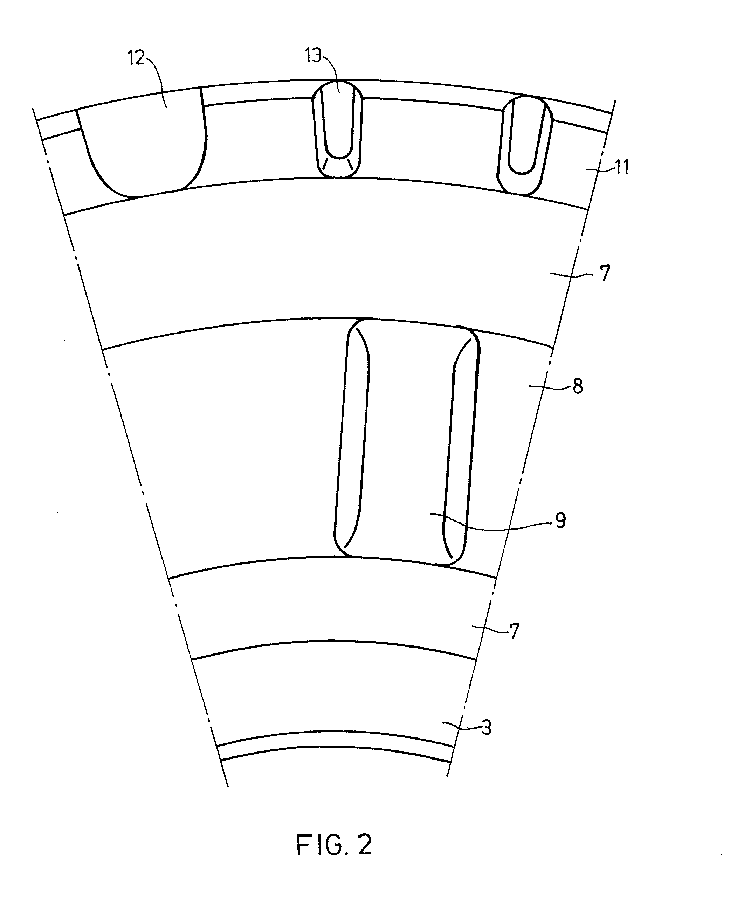

In Fig. 2 sind in der Seitenansicht die kreisringförmigen Flächen der Seitenwand 6 mit dazwischen liegender
Aussparung 8 einschließlich Einbuchtungen 9 gezeigt.
Die kreisringförmige Fläche 7 ist über die Aussparung
11 mit der Lauffläche verbunden, an die versetzt zu

Le A 21 245 - Europa

0071900

den Einbuchtungen 9 bis zur Mitte gehende größere Profileinschnitte 12 und auf den Umfang verteilt, weitere kleinere Profileinschnitte 13 anschließen.Die innere Aussparung 3 beginnt ebenfalls kurz vor dem nicht dargestellten Felgenhorn, um schließlich am Felgenhorn entlang zu laufen.

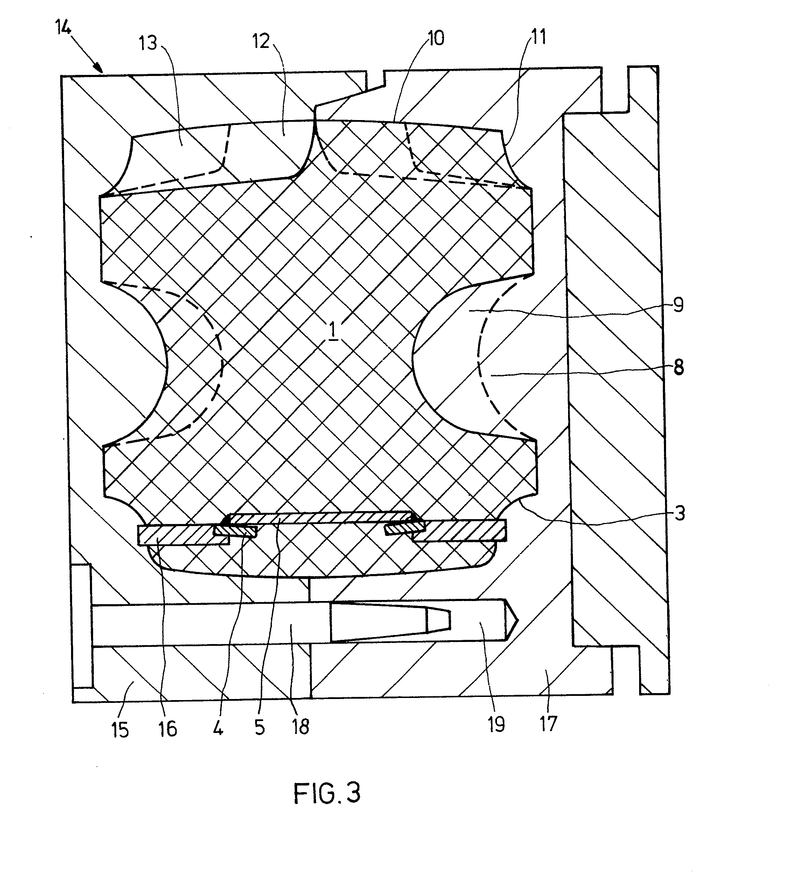

Fig. 3 zeigt das Werkzeug 14. Zur Herstellung werden in die während der Fertigung unten liegende Muldenhälfte 15 zunächst die mit 6 - 10 Stegen 5 verbundene Stahlkern-Ringe 4 in die unteren konischen Kernhalter 16 positioniert. In der anderen Muldenhälfte 17 wird eine Kautschuk-Mischung eingebracht. Dann wird die obere Muldenhälfte 17 gegen die untere unter Führung durch vier im Umfang verteilte Zentrierstifte 12 in Führungsbohrringe 19 gefahren und gleichzeitig der Stahlkern-Ring durch Zentrierstifte 18 fixiert. Es wird ein Druck mittels eines nicht dargestellten Kolbens auf die Gummimischung erzeugt. Anschließend erfolgt die Vulkanisation durch Heizung des Werkzeugs 14 über einen Zeitraum von 15 - 40 Min. bei einer Temperatur von etwa 175°C. Anschließend kann nach dem Öffnen des Werkzeugs der fertige Gummifederreifen entnommen werden.

Le A 21 245-Europa

0071900

Patentansprüche:

1. Gummifederreifen für geteilte Felge bestehend aus
   einem ringförmigen Vollgummikörper (1) mit Reifenfuß (2) und Lauffläche (10) aus einheitlicher
   Gummimischung, dadurch gekennzeichnet, daß bei dem
   Vollgummikörper an jeder Seitenwand (6) ein oberer
   Rand, ein Mittelbereich und ein unterer Rand durch
   parallel zum Äquator umlaufende, im Querschnitt
   mindestens teilweise ausgerundeten Aussparung (3, 8,
   11) gebildet ist, und daß als Drahtkern mindestens
   zwei parallel umlaufende metallene Ringe (4), die
   untereinander in Abständen durch Stege (5) verbunden sind, angeordnet sind.

2. Gummifederreifen nach Anspruch 1, dadurch gekennzeichnet, daß die Mitte der Ausnehmung des Mittelbereiches in einer Höhe gleich dem 0,4 - 0,5-fachen
   der Gesamthöhe des Gummifederreifens liegt, wobei
   die Aussparung eine Tiefe vom 0,1 - 0,2-fachen
   der Gesamtbreite und eine Höhe im maximalen Bereich
   vom 0,3 - 0,5-fachen der Gesamthöhe besitzt.

3. Gummifederreifen nach Anspruch 1 - 7, dadurch gekennzeichnet, daß die im Mittelbereich liegende
   Aussparung (8) mit durch diese hindurchgreifende
   ausgerundete Einbuchtungen (9), die einen Innenradius vom 0,1 - 0,3-fachen bei einer Tiefe vom
   0,2 - 0,4-fachen der Reifenbreite besitzen, versehen ist.

Le A 21 245

4.  Gummifederreifen nach Anspruch 1 - 3, dadurch gekennzeichnet, daß beiderseits 10 - 50 Einbuchtungen (9), vorzugsweise 12 - 30 Einbuchtungen (9), versetzt angeordnet sind.

5.  Gummifederreifen nach Anspruch 1 - 4, dadurch gekennzeichnet, daß die obere und untere Aussparung (3, 11) einen Innenradius vom 0,1 - 0,2-fachen der Reifenbreite besitzt.

6.  Gummifederreifen nach Anspruch 1 - 5, dadurch gekennzeichnet, daß an die obere Aussparung (11) in axialer Richtung systematisch kleinere und größere Profileinschnitte (12, 13) anschließen.

7.  Verfahren zur Herstellung eines Gummifederreifens gemäß Anspruch 1 - 6 durch Spritz- oder Transferverfahren, dadurch gekennzeichnet, daß in ein geöffnetes Werkzeug (14) mit Steg (5) verbundene Stahlkern-Ringe (4) in Kernhalter (16) eingelegt werden, die nach dem Ausfüllen des geschlossenen Werkzeugs mit Gummimischung herausgezogen werden.

Le A 21 245

FIG.1

FIG. 2

0071900

3/3

FIG.3